**Europäisches Patentamt**

**European Patent Office**

**Office européen des brevets**

(19)

(11) Veröffentlichungsnummer : **0 172 465 B1**

(12) **EUROPÄISCHE PATENTSCHRIFT**

(45) Veröffentlichungstag der Patentschrift :
**01.02.89**

(21) Anmeldenummer : **85109647.9**

(22) Anmeldetag : **31.07.85**

(51) Int. Cl.⁴ : **G 01 F 25/00**

(54) **Prüfeinrichtung für Durchflussmesser.**

(30) Priorität : **04.08.84 DE 3428805**

(43) Veröffentlichungstag der Anmeldung :
**26.02.86 Patentblatt 86/09**

(45) Bekanntmachung des Hinweises auf die Patenterteilung : **01.02.89 Patentblatt 89/05**

(84) Benannte Vertragsstaaten :
**AT BE CH FR GB IT LI NL**

(56) Entgegenhaltungen :
**DE--A-- 1 673 887**
**GB--A-- 2 088 566**
**US--A-- 3 492 856**
**US--A-- 4 419 880**

(73) Patentinhaber : **BOPP & REUTHER GMBH**
**Carl-Reuther-Strasse 1**
**D-6800 Mannheim 31 (DE)**

(72) Erfinder : **Böhm, Jürgen, Dr. Ing.**
**Krautheimerstrasse 11**
**D-6800 Mannhein-Wallstadt (DE)**

EP 0 172 465 B1

**Beschreibung**

Die Erfindung bezieht sich nach dem Oberbegriff des Anspruchs 1 auf eine Prüfeinrichtung für in eine Rohrleitung eingebaute Durchflußmesser mit umlaufenden Meßrädern, bei der ein in Reihe mit dem Durchflußmesser schaltbarer Meßzylinder vorgesehen ist, in dem ein während des Prüflaufs von der zu messenden Flüssigkeit bewegter und das zwischen einer Start- und einer Stoppstellung verdrängte Vergleichsvolumen bestimmender Meßkolben mit einer nach außen geführten Kolbenstange gleitet, wobei die Dauer des Prüflaufs von einer vom zu prüfenden Durchflußmesser abgegebenen vorbestimmten Anzahl von eine erste Pulskette bildenden elektrischen Pulsen, die dem größtmöglichen Vielfachen der Pulszahl je voller Meßradumdrehung einspricht, bestimmt wird, und von einem auf die Bewegung der Kolbenstange ansprechenden Sensor, der während des Prüflaufs ein feststehendes, sich über den Kolbenstangenhub erstreckendes und durch eine Vielzahl von gleich weit voneinander entfernten Abstandsmarken feinstunterteiltes Volumenlineal elektrisch abtastet, weitere eine zweite Pulskette bildende elektrische Pulse abgegeben werden, deren Aufaddierung nach Beendigung des Meßkolbenanlaufes von dem vom Durchflußmesser kommenden Startpuls begonnen und am Ende des Prüflaufs von dem von Durchflußmesser abgegebenen letzten Impuls gestoppt wird, wobei das sich aus den aufarddierten Pulsen der zweiten Pulskette ergebende Vergleichsvolumen des Meßkolbens mit dem sich aus den Pulsen der ersten Pulskette ergebenden Volumen des Durchflußmessers verglichen und hieraus der Fehler des Durchflußmessers erkennbar wird.

Eine Prüfeinrichtung mit diesem Merkmalen ist aus der GB-A-2 088 556 bekannt geworden. Bei dieser bekannten Prüfeinrichtung ist die nach außen geführte Kolbenstange mit einem Stellungsanzeiger versehen, der die Stellung des Meßkolbens während des Prüflaufs auf ein mit Abstandsmarken und einer Abtastvorrichtung versehenes Volumenlineal überträgt. Die Abtastvorrichtung gibt elektrische Ausgangssignale ab, die in einer elektronischen Auswerteschaltung aufaddiert und mit den während des Prüflaufs von dem zu prüfenden Durchflußmesser abgegebenen Pulsen verglichen werden.

Da die Anzahl der zwischen Start und Stopp vom Durchflußmesser abgegebenen Pulse den während eines Prüflaufs möglichen vollen Meßradumdrehungen des Durchflußmessers angepaßt ist, lassen sich mit der bekannten Prüfeinrichtung alle während einer Umdrehung des Durchflußmesser-Meßrades auftretenden Unregelmäßigkeiten ausgleichen. Allerdings ist eine Fehlerquelle bei der bekannten Prüfeinrichtung noch darin zu sehen, daß bereits vor Beginn des eigentlichen Prüflaufs beim Durchfahren der Meßkolben-Anlaufstrecke sowohl von Durchflußmesser als auch vom Meßkolben Pulse für die erste und zweite Pulskette abgegeben werden, die durch ihre zeitlich unterschiedlichen Pulsabstände versetzt zueinander liegen. Wenn der Prüflauf durch den vom Durchflußmesser kommenden Startpuls anläuft und damit die Aufaddierung der vom Volumenlineal abgetasteten Pulse für die Meßkolbenbewegung beginnt, wird erst der nach dem Startpuls ankommende nächste volle Puls der zweiten Pulskette gezählt. Das gleiche gilt auch am Ende des Prüflaufs, da der vom Durchflußmesser kommende Stoppuls die Aufaddierung der Pulse der zweiten Pulskette erst beim Eintreffen des nächsten vollen Pulses stoppt. Durch diese zeitliche Verschiebung der die Bewegung des Meßkolbens wiedergebenden zweiten Pulskette um Pulsbruchteile am Start und am Stopp treten Meßfehler auf. Außerdem erfolgt bei der bekannten Prüfeinrichtung keine besondere Signalabgabe in dem Augenblick, in dem der Meßkolben die Anlaufstrecke durchfahren hat und der Prüflauf beginnen kann.

Aus der US-PS 3 492 856 ist eine andere Prüfeinrichtung bekannt geworden, bei der die nach außen geführte Kolbenstange des Meßkolbens über eine Traverse fest mit einer sich in Gleitführungen parallel zur Kolbenstange bewegenden Zahnstange verbunden ist, die die Bewegungen der Kolbenstange über mehrere Übersetzungsgetrieberäder auf eine mit einem Pulsgenerator verbundene Welle überträgt. Dieser Pulsgenerator gibt in Abhängigkeit von den Drehwinkelstellungen der Welle eine große Zahl von elektrischen Pulsen für die zweite Pulskette ab. Ein solcher Kolbenstangenabgriff ist durch die parallel mitgeführte Zahnstange und durch die Übersetzungsgetrieberäder sehr kompliziert und unvermeidliche Toleranzen an den Verzahnungen oder eine elastische Verformung an der aus Kolbenstange, Traverse und Zahnstange gebildeten sperrigen Abtastkonstruktion haben spürbare Meßfehler zur Folge.

Aufgabe der Erfindung ist es, eine Prüfeinrichtung nach den Merkmalen des Oberbegriffs des Anspruchs 1 so zu verbessern, daß sich eine noch höhere Meßgenauigkeit ergibt.

Die Lösung dieser Aufgabe wird in den kennzeichnenden Merkmalen des Patentanspruchs 1 gesehen.

Dadurch, daß die Abstandsmarkierung erst am Ende der Anlaufstrecke des Meßkolbens beginnt, und der Sensor beim Überfahren der ersten Abstandsmarke ein Signal zur Bestimmung des Startpulses der ersten Pulskette abgibt, liegt der Beginn des Prüflaufs genau am Anfang der eigentlichen Meßstrecke, so daß der Meßzylinder voll für einen Prüflauf mit möglichst vielen ganzzahligen Meßradumdrehungen des Durchflußmessers ausgenutzt werden kann. Der sich während des Prüflaufs für die zweite Pulskette durch die zeitliche Verschiebung des ersten Pulses am Start und des letzten Pulses am Stopp ergebende Meßfehler wird dadurch kompensiert, daß auch die am Start und Stopp auftretenden Teile eines Pulses erfaßt werden. Dies geschieht dadurch, daß die gegenüber der vollen Pulszahl $m$ um den Pulsbruchteil am Start und den Pulsbruchteil am Stopp veränderte Pulszahl $q$ durch Insverhältnissetzen der Zeit $Tm$ zwischen dem Startpuls und dem Stoppuls der ersten Pulskette zu der Zeit $Tp$ zwischen dem ersten Puls und dem letzten Puls der zweiten Pulskette festgestellt wird. Diese durch die Bruchteilskorrektur veränderte Pulszahl q wird bei der Feststellung des vom Meßkolben verdrängten Vergleichsvolumens bei der Auswertung zugrunde gelegt, so daß eine hohe Ansprechgenauigkeit für die Prüfeinrichtung erzielt wird.

In den Fällen, in denen zwischen Meßrad und Impulsgeber des Durchflußmessers ein Getriebe mit nicht ganzzahliger Übersetzung zwischengeschaltet ist, kommt es vor, daß das ganzzahlige Vielfache der Meßradumdrehungen eine gebrochene Pulszahl ergibt. Um auch hier einen durch diesen Pulsbruchteil verursachten Meßfehler zu vermeiden wird entsprechend dem Merkmal des Anspruchs 2 vorgeschlagen, die Gesamtpulszahl für die erste, den Prüflauf bestimmende Pulskette auf die nächste ganze Pulszahl zu erhöhen und diesen letzten Puls als Stoppuls für die vom Sensor der Kolbenstange ausgehende aufsummierte zweite Pulskette zu verwenden. Es wurde erkannt, daß durch diese Erhöhung der gebrochenen Gesamtpulszahl auf die nächste ganze Pulszahl mit der Korrektur der Pulsbruchteile der vom Sensor der Kolbenstange abgegebenen zweiten Pulskette gemäß Anspruch 1 gleichzeitig auch der Pulsbruchteil der ersten Pulskette berücksichtigt wird, da die Korrektur der ersten Pulskette jetzt unabhängig ist von der Zeit $Tm_2$ für eine gebrochene Gesamtpulszahl.

Die den Prüflauf bestimmende Zahl der Pulse des Durchflußmessers läßt sich in einfacher Weise nach dem Merkmal des Anspruchs 3 durch den Rechner der Prüfeinrichtung bestimmen, wenn die für den zu prüfenden Durchflußmesser bekannte Zahl der Pulse je Meßradumdrehung eingegeben wird.

Werden die Abstandsmarken des Volumenlineals entsprechend den Merkmalen des Anspruchs 4 aus gleichbreiten Strichen und lichtdurchlässigen Lücken oder Stegen und Schlitzen gebildet und ist am Ende der Kolbenstange als Sensor eine Fotodiode befestigt, vor der eine Fahne mit einigen Gegenabstandsmarken fest am Kolbenstangenende sitzt, so ergibt sich für die Fotodiode während der Bewegung des Meßkolbens ein sich über eine größere Fläche erstreckender und damit gut zu unterscheidender Hell-Dunkel-Kontrast, der aufgrund der abwechselnd erfolgenden vollen Abdeckung und vollen Freigabe der Lücken oder Schlitze der Abstandsmarken durch die Striche und Lücken bzw. Stege und Schlitze der Fahnenmarken ausgelöst wird.

Die Erfindung wird anhand der Zeichnung näher erläutert, und zwar zeigt

Fig. 1 die Zuordnung der vom Sensor der Kolbenstange kommenden zweiten Pulskette zu der vom Durchflußmesser kommenden ersten Pulskette im Diagramm,

Fig. 2 schematisch die am Ende der Meßkolbenstange vorgesehene Fahne im Zusammenwirken mit dem Volumenlineal in Seitenansicht und

Fig. 3 das Kolbenstangenende mit Sensor, Fahne und Volumenlineal in Rückansicht.

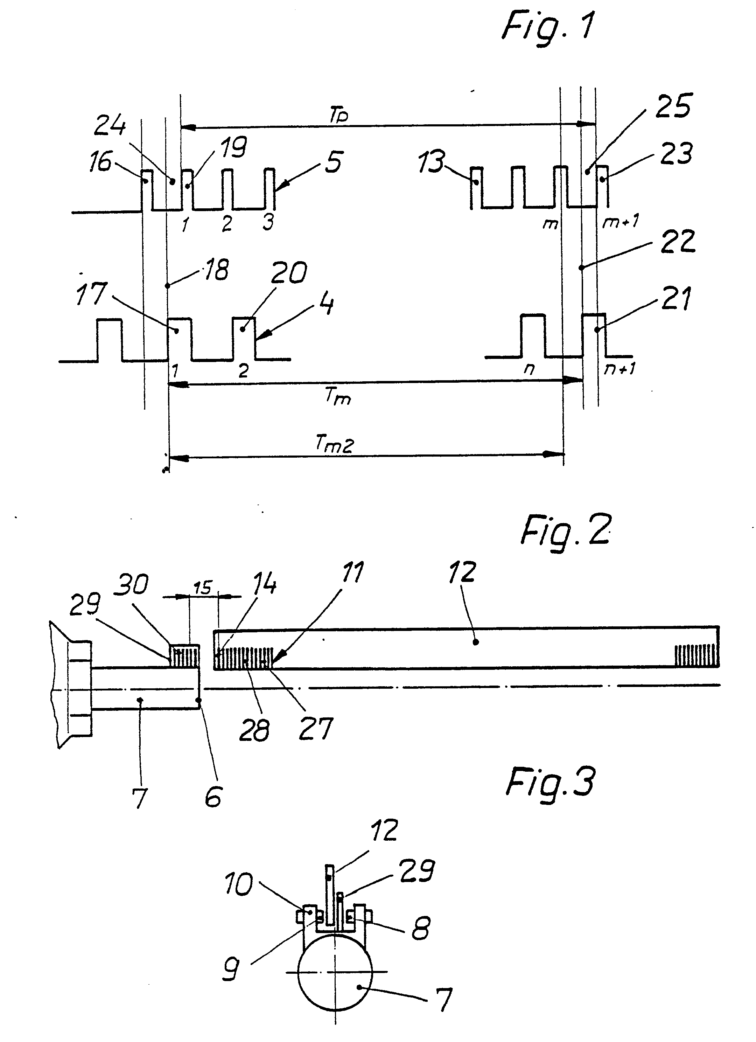

In dem in der Fig. 1 gezeigten Diagramm ist unten die vom zu prüfenden Durchflußmesser abgegebene erste Pulskette 4 und oben die vom Sensor der Kolbenstange kommende zweite Pulskette 5 dargestellt. Wie die Figuren 2 und 3 erkennen lassen, wird die zweite Pulskette 5 von einem am Ende 6 der nach außen geführten Kolbenstange 7 des Meßkolbens vorgesehenen Sensor 8 erzeugt. Der Sensor 8 ist als Fotodiode ausgebildet und wird von einer Lichtquelle 9 beaufschlagt. Fotodiode 8 und Lichtquelle 9 sitzen in den Schenkeln eines U-förmigen Trägers 10, der fest mit der Kolbenstange 7 verbunden ist. Während des Prüflaufs tastet die Fotodiode 8 die gleichweit voneinander entfernten Abstandsmarken 11 eines feststehenden Volumenlineals 12 optoelektrisch ab und gibt bei jedem Überfahren einer Abstandsmarke 11 einen elektrischen Impuls 13 der zweiten Pulskette 5 ab.

Das Volumenlineal 12 ist so lang ausgebildet, daß sich die aufgebrachten Abstandsmarken 11 über den ganzen Hub des Meßkolbens bzw. der Kolbenstange 7 erstrecken, und die Gesamtzahl der Abstandsmarken 11 ist durch entsprechende Feinstunterteilung so groß wie nur möglich gewählt, damit sich eine hohe Auflösung für das vom Meßkolben verdrängte Vergleichsvolumen ergibt.

Die Fig. 2 zeigt die Kolbenstange 7 in der Stellung bei Beginn des Prüflaufs. Die erste Abstandsmarke 14 des Volumenlineals 12 ist erst am Ende der Anlaufstrecke 15 des Meßkolbens vorgesehen. Die Fotodiode 8 gibt beim Überfahren der ersten Linealmarke 14 ein Signal 16 für die vom Durchflußmesser kommende erste Pulskette 4 ab, die jetzt mit dem nächsten ankommenden Puls 17 den Start 18 des Prüflaufs auslöst. Von dem nach dem Startimpuls 18 vom Sensor 8 kommenden ersten Puls 19 an werden die Pulse 13 der zweiten Pulskette 5 aufsummiert. Die Anzahl der vom Durchflußmesser während des Prüflaufs abgegebenen Pulse 20 wird dem größtmöglichen Vielfachen der Pulszahl je Meßradumdrehung angepaßt, so daß am Ende der letzten vollen Meßradumdrehung der Stoppuls 21 vom Durchflußmesser abgegeben wird, der den Stopp 22 des Prüflaufs auslöst. Dadurch wird die Aufsummierung der vom Sensor 8 der Kolbenstange 7 kommenden Pulse 13 beim nächsten ankommenden Puls 23 gestoppt. Während die vom Durchflußmesser kommende erste Pulskette 4 am Start 18 mit der ansteigenden Flanke des ersten Pulses 17 und am Stopp 22 mit der ansteigenden Flanke des letzten Pulses 21 zusammenfällt, ergibt sich bei der vom Sensor 8 kommenden Pulskette 5 beim ersten Puls 19 durch den Pulsbruchteil 24 eine Zeitverzögerung am Start 18 und durch den Pulsbruchteil 25 beim letzten Puls eine Zeitverzögerung am Stopp 22.

Die Abstandsmarken 11 des Volumenlineals 12 werden durch Striche 27 und Lücken 28 gebildet, die beide gleich breit ausgebildet sind. Vor der Fotodiode 8 ist eine Fahne 29 angeordnet, die an dem am Kolbenstangenende 6 vorgesehenen Träger 10 befestigt ist. Diese Fahne 29 trägt eine kleinere Anzahl von Gegenmarken 30, die aus den gleichen Strichen 27 und Lücken 28 wie die Abstandsmarken 11 des Volumenlineals 12 gebildet werden. Das Volumenlineal 12 und die Fahne 29 sind aus lichtdurchlässigem Werkstoff hergestellt, so daß sich beim Vorbeibewegen der Fahne 29 an den Markierungen 11 des Volumenlineals 12 für die Fotodiode 8 ein kräftiger Hell-Dunkel-Effekt ergibt.

Um die sich durch die Zeitverzögerung beim Start 18 und Stopp 22 ergebenden Pulsbruchteile 24 und 25 der vom Sensor 8 kommenden Pulse 13 zu kompensieren, schwingt während des Prüflaufs ein Zeitquarz mit, der einerseits die Zeit Tm zwischen dem Startpuls 17 und dem Stoppuls 21 der ersten Pulskette 4 und andererseits die Zeit Tp zwischen dem ersten Puls 19 und dem letzten Puls 23 der zweiten Pulskette 5 festhält. Ist m die Anzahl der aufsummierten Pulse während der Zeit Tp und q die um die Pulsbruchteile 24 und 25 veränderte Gesamtpulszahl, so gilt folgende Gleichung

$$\frac{Tm}{q} = \frac{Tp}{m}$$

· Hieraus ergibt sich die korrigierte Gesamtpulszahl

$$q = \frac{Tm}{Tp} \cdot m$$

Zur Erfassung der Pulsbruchteile 24 und 25 ist somit lediglich das Verhältnis von Tm : Tp mit der Anzahl m der aufsummierten Pulse 13 zu multiplizieren. Diese Rechenoperation wird im Rechner der Prüfvorrichtung durchgeführt.

Der Zählerfaktor $k_m$ für den Durchflußmesser ergibt sich aus der Gesamtzahl n der während des Prüflaufs abgegebenen Pulse 20 der ersten Pulskette 4 je Einheit des Volumens V mit $k_m = n/V$. Dementsprechend ist der k-Wert der Prüfvorrichtung $k_p = q/V$. Werden die beiden Volumina V gleichgesetzt, so ergibt sich die Gleichung

$$\frac{n}{k_m} = \frac{q}{k_p} \quad \text{und hieraus} \quad k_m = \frac{n \cdot k_p}{q}$$

Wird für q die obige Gleichung eingesetzt, wird

$$k_m = \frac{k_p \cdot n \cdot T_p}{m \cdot Tm}$$

Ergibt sich bei nicht ganzzahliger Pulszahl je Meßradumdrehung des Durchflußmessers eine nicht ganzzahlige Gesamtpulszahl r für den in der Zeit Tm2 ablaufenden Prüfvorgang, wird der dieser gebrochenen Pulszahl folgende Puls 21 als Stoppimpuls für die zweite Pulskette 5 benutzt, so daß von einer ganzzahligen Gesamtpulszahl n ausgegangen wird. Hier gelten die Gleichungen

$$\frac{Tm2}{r} = \frac{Tm}{n} \qquad \frac{Tp}{m} = \frac{Tm2}{q}$$

Außerdem gilt für die k-Werte $k_m = r/V$ und $k_p = q/V$.
Nach Gleichsetzen von V ergibt sich

$$\frac{r}{k_m} = \frac{q}{k_p} \quad \text{und somit} \quad k_m = \frac{p \cdot r}{q}$$

Werden aus den zuerst genannten beiden Gleichen r und q isoliert und in die obige Gleichung eingesetzt, ergibt sich

$$k_m = \frac{k_p \cdot n \cdot Tp}{Tm \cdot m}$$

Die Erkenntnis hieraus ist, daß die Korrektur der ersten Pulskette 4 unabhängig von Tm2 durchführbar ist und allein durch Multiplikation mit dem Verhältnis Tp : Tm gleichzeitig mit der Korrektur der Pulsbruchteile 24 und 25 der vom Sensor 8 der Kolbenstange abgegebenen zweiten Pulskette 5 erfolgt.

**Patentansprüche**

1. Prüfeinrichtung für in eine Rohrleitung eingebaute Durchflußmesser mit umlaufenden Meßrädern, bei der ein in Reihe mit dem Durchflußmesser schaltbarer Meßzylinder vorgesehen ist, in dem ein während des Prüflaufs von der zu messenden Flüssigkeit bewegter und das zwischen einer Start- und einer Stoppstellung verdrängte Vergleichsvolumen bestimmender Meßkolben mit einer nach außen geführten Kolbenstange (7) gleitet, wobei die Dauer des Prüflaufs von einer vom zu prüfenden Durchflußmesser abgegebenen vorbestimmten Anzahl von eine erste Pulskette (4) bildenden elektrischen Pulsen (20), die dem größtmöglichen Vielfachen der Pulszahl je voller Meßradumdrehung entspricht, bestimmt wird, und von einem auf die Bewegung der Kolbenstange (7) ansprechenden Sensor (8), der während des Prüflaufs ein feststehendes, sich über den Kolbenstangenhub erstreckendes und durch eine Vielzahl von gleich weit voneinander entfernten Abstandsmarken (11) feinstunterteiltes Volumenlineal (12) elektrisch abtastet, weitere eine zweite Pulskette (5) bildende elektrische Pulse (13) abgegeben werden, deren Aufaddierung nach Beendigung des Meßkolbenanlaufes von dem vom Durchflußmesser kommenden Startpuls (17) begonnen und am Ende des Prüflaufs von dem vom Durchflußmesser abgegebenen letzten Puls (21) gestoppt wird, wobei das sich aus den aufaddierten Pulsen (13) der zweiten Pulskette (5) ergebende Vergleichsvolumen des Meßkolbens mit dem sich aus den Pulsen (20) der ersten Pulskette (4) ergebenden Volumen des Durchflußmessers verglichen und hieraus der Fehler des Durchflußmessers erkennbar wird, dadurch gekennzeichnet, daß die erste Abstandsmarke (14) des Volumenlineals (12) am Ende der Kolbenanlaufstrecke (15) vorgesehen ist, und der am Ende (6) der Kolbenstange (7) vorgesehene Sensor (8) beim Überfahren dieser ersten Abstandsmarke (14) ein Signal zur Bestimmung des Startpulses (17) der ersten Pulskette (4) abgibt, wobei die sich während des Prüflaufs für die Pulse (13) der zweiten Pulskette (5) ergebende, gegenüber der vollen Pulszahl m um den Pulsbruchteil (24) am Start (18) und den Pulsbruchteil (25) am Stopp (22) veränderte Pulszahl q durch Insverhältnissetzen der Anzahl der Schwingungen eines Zeitquarzes während der Zeit Tm zwischen dem Startpuls (17) und dem Stoppuls (21) der ersten Pulskette (4) mit der Anzahl der Schwingungen des Zeitquarzes während der Zeit Tp zwischen dem ersten auf das Startsignal (18) folgenden Puls (19) und dem ersten auf das Stoppsignal (22) folgenden Puls (23) der zweiten Pulskette (5) durch Multiplizieren des erhaltenen Verhältnisses mit der Zahl m der aufsummierten Pulse (13) der zweiten Pulskette (5) ermittelt wird und als Korrekturgröße bei der Feststellung des vom Meßkolben verdrängten Vergleichsvolumens der Prüfeinrichtung berücksichtigt ist.

2. Prüfeinrichtung nach Anspruch 1, dadurch gekennzeichnet, daß bei einer nicht ganzzahligen, sich aus dem Vielfachen der Pulszahl je Meßradumdrehung des Durchflußmessers ergebenden Gesamtpulszahl für die erste Pulskette (4) die Gesamtpulszahl auf die nächste ganze Pulszahl erhöht ist und dieser letzte Puls (21) als Stoppuls für die vom Sensor (8) der Kolbenstange (7) ausgehenden, aufzusummierenden Pulse (13) der zweiten Pulskette (5) gilt.

3. Prüfeinrichtung nach Anspruch 1 oder 2, dadurch gekennzeichnet, daß die für den zu prüfenden Durchflußmesser bekannte Zahl der Pulse je Maßradumdrehung in einen Rechner eingegeben und in einem Vorprüflauf des Meßkolbens die Zahl der während des ganzen Kolbenhubs eingezählten Gesamtpulse festgestellt wird, wobei der Rechner aus dem Verhältnis der möglichen Gesamtpulszahl zur Zahl der Pulse je Meßradumdrehung die Anzahl der ganzen Meßradumdrehungen und damit die Zahl der Pulse (20) für die erste Pulskette (4) während des Prüflaufs ermittelt.

4. Prüfeinrichtung nach einem der Ansprüche 1 bis 3, dadurch gekennzeichnet, daß die Abstandsmarken (11) durch auf das Volumenlineal (12) aufgebrachte Striche (27) und lichtdurchlässige Lücken (28) oder Stege und Schlitze gebildet werden, und die Striche (27) oder Stege genauso oder annähernd so breit sind wie die lichtdurchlässigen Lücken bzw. Schlitze, wobei als Sensor ein von einer Lichtquelle (9) gespeister optoelektrischer Aufnehmer (8), insbesondere eine Fotodiode, am Ende (6) der Meßkolbenstange (7) befestigt ist und das Kolbenstangenende (6) außerdem eine vor dem Aufnehmer (8) sitzende Fahne (29) trägt, die mit einer kleinen Anzahl von Gegenmarken (30) gleichen Abstandes und gleicher Ausbildung wie die Abstandsmarken (11) auf dem Volumenlineal (12) versehen ist, welche in Verbindung mit den Abstandsmarken (11) des Volumenlineals (12) beim Übereinanderliegen der Lücken oder Schlitze eine ausgeprägte Hellschaltung und beim Abdecken der Lücken (28) oder Schlitze des Volumenlineals (12) durch die Striche oder Stege der Gegenmarken (30) eine ausgeprägte Dunkelschaltung für den optoelektrischen Aufnehmer (8) bilden.

## Claims

1. Test apparatus for a flow measuring instrument installed in a pipe-line and comprising rotating measuring wheels, wherein is provided a measuring cylinder switchable in series with the flow measuring instrument, in which slides a measuring piston displaced during the test run by the fluid which is to be measured and determining a comparison volume displaced between a starting position and a stopping position, said piston having an outwardly extended piston rod (7), the period of the test run being determined by a predetermined number of electrical pulses (20) emitted by the flow measuring instrument which is to be tested, said pulses generating a first pulse train (4) and said number corresponding to the maximum multiple of the pulse number per complete measuring wheel revolution, and by a sensor (8) reacting to the displacement of the piston rod (7), which during the test run electrically scans a stationary volume rule (12) finely subdivided by a plurality of equidistant distance markings (11), said sensor emitting further electrical pulses (13) generating a second pulse train (5), the summation of which is begun after completion of the measuring piston start caused by the starting pulse (17) coming from the flow measuring instrument and stopped at the end of the test run by the last pulse (21) emitted by the flow

5

measuring instrument, the comparison volume of the measuring piston resulting from the summated pulses (13) of the second pulse train (5) being compared to the volume of the flow measuring instrument determined from the pulses (20) of the first pulse train (4), and the error of the flow measuring instrument being discernible therefrom, characterised in that the first distance marking (14) of the volume rule (12) is provided at the end of the piston starting section (15), and the sensor (8) provided on the end (6) of the piston rod (7) emits a signal upon passing over this first distance marking (14) to determine the starting pulse (17) of the first pulse train (4), the pulse number q resulting during the test run for the pulses (13) of the second pulse train (5), varied from the full pulse number m by the pulse fraction (24) at the start (18) and by the pulse fraction (25) at the stop (22), being determined by establishing the ratio between the number of oscillations of a timing crystal during the period Tm between the starting pulse (17) and the stopping pulse (21) of the first pulse train (4) and the number of oscillations of the timing crystal during the period Tp between the first pulse (19) following the starting signal (18) and the first pulse (23) following the stopping signal (22) of the second pulse train (5) and by multiplying the ratio obtained with the number m of the summated pulses (13) of the second pulse train (5) and being taken into account as a correction factor during determination of the comparison volume displaced by the measuring piston of the test apparatus.

2. Test apparatus according to claim 1, characterised in that in the case of a not quite integral total pulse number resulting from the multiple of the pulse number per measuring wheel revolution of the flow measuring instrument for the first pulse train (4), the total pulse number is raised to the next integral pulse number and this last pulse (21) is applicable as a stopping pulse for the pulses (13) of the second pulse train (5) which are emitted by the sensor (8) of the piston rod (7) and which are to be summated.

3. Test apparatus according to claim 1 or 2, characterised in that the number of pulses per measuring wheel revolution which is known for the flow measuring instrument which is to be tested, is fed into a computer and that during an initial test run of the measuring piston, the number is determined of the total pulses counted during the complete piston stroke, the computer determining the number of the complete measuring wheel revolutions from the ratio between the possible total pulse number and the number of pulses per measuring wheel revolution, and thereby the number of pulses (20) for the first pulse train (4) during the test run.

4. Test apparatus according to one of the claims 1 to 3, characterised in that the distance markings (11) are formed by lines (27) inscribed on the volume rule (12) and by light-transmissive gaps (28) or cross-pieces and slits, and the lines (27) or cross-pieces being precisely or approximately as wide as the light-transmissive gaps or slits, an opto-electric pick-up (8), in particular a photodiode, which is fed by means of a light source (9), being installed as a sensor on the end (6) of the measuring piston rod (7), and the piston rod end (6) furthermore carrying a flag (29) situated in front of the pick-up (8) which is provided with a small number of matching markings (30) having the same graduation and form as the distance markings (11) on the volume rule (12), which in conjunction with the distance markings (11) of the volume rule (12) produce a pronounced bright condition during superimposition of the gaps or slits, and a pronounced dark condition of the opto-electric pick-up (8) during covering of the gaps (28) or slits of the volume rule (12) by the lines or cross-pieces of the matching markings (30).

**Revendications**

1. Dispositif d'essai pour un débitmètre installé dans une canalisation et pourvu de roues de mesure rotatives, comportant, apte à être monté en série avec le débitmètre, un cylindre de mesure dans lequel coulisse, pendant le processus d'essai, un piston de mesure muni d'une tige de piston (7) dirigée vers l'extérieur, qui est mu par le fluide à mesurer et détermine le volume de référence déplacé entre une position de départ et une position d'arrêt, la durée du processus d'essai étant définie par un nombre prédéterminé d'impulsions électriques (20) délivrées par le débitmètre à tester et formant un premier train d'impulsions (4), qui correspond au plus grand multiple possible du nombre d'impulsions produites à chaque rotation complète des roues de mesure, tandis que sont délivrées par un détecteur (8) sensible au déplacement de la tige de piston (7), lequel, pendant le processus d'essai, balaye électriquement une règle volumétrique fixe (12) s'étendant au-delà de la course de la tige de piston et finement subdivisée par une pluralité de repères d'espacement (11) écartés d'une distance égale les uns des autres, d'autres impulsions électriques (13) formant un second train d'impulsions (5), dont l'addition est déclenchée, après achèvement du démarrage du piston de mesure, par l'impulsion de départ (17) provenant du débitmètre, et stoppée, à la fin du processus d'essai, par la dernière impulsion (21) délivrée par le débitmètre, pour ainsi comparer le volume de référence du piston de mesure résultant des impulsions (13) additionnées du second train d'impulsions (5) et le volume du débitmètre résultant des impulsions (20) du premier train d'impulsions (4), et pouvoir, par conséquent, mettre en évidence l'erreur du débitmètre, caractérisé en ce que le premier repère d'espacement (14) de la règle volumétrique (12) est placé à la fin de la distance de démarrage (15) du piston, tandis que le détecteur (8) prévu au niveau de l'extrémité (6) de la tige de piston (7) délivre, lors du dépassement de ce premier repère d'espacement (14), un signal destiné à déterminer l'impulsion de départ (17) du premier train d'impulsions (4), pour ainsi définir le nombre d'impulsions q obtenu, pendant le processus d'essai, pour les impulsions (13) du second train d'impulsions (5), qui diffère du nombre total d'impulsions m par la fraction d'impulsion (24) au départ (18) et la fraction d'impulsion (25) à l'arrêt (22), en établissant un rapport entre le nombre des oscillations d'un quartz pendant le temps Tm écoulé entre l'impulsion de départ (17) et l'impulsion d'arrêt (21) du premier train d'impulsions (4) et le nombre des oscillations du quartz pendant le temps Tp écoulé entre la première impulsion (19) qui suit le signal de départ (18) et la première impulsion (23) du second train d'impulsions (5) qui suit le signal d'arrêt (22), et en multipliant le rapport obtenu par le nombre m des impulsions (13) cumulées du second train d'impulsions (5), et considérer ce nombre d'impulsions q comme une grandeur de correction lors de la détermination du volume de référence du dispositif d'essai, déplacé par le piston de mesure.

2. Dispositif d'essai selon la revendication 1, caractérisé en ce que, lorsque, pour le premier train d'impulsions (4), le nombre total d'impulsions résultant du multiple du nombre d'impulsions produites à chaque rotation des roues de mesure du débitmètre, n'est pas un nombre entier, le nombre total d'impulsions est élevé au nombre d'impulsions entier suivant, et cette dernière impulsion (21) fait fonction d'impulsion d'arrêt pour les impulsions (13) à additionner du second train d'impulsions (5), provenant du détecteur (8) de la tige de piston (7).

3. Dispositif selon la revendication 1 ou 2, caractérisé en ce que le nombre connu des impulsions produites à chaque rotation des roues de mesure, pour le débitmètre à tester, est introduit dans un ordinateur, tandis que le nombre d'impulsions totales enregistré pendant toute la course du piston est déterminé au cours d'un processus d'essai préalable du piston de mesure, l'ordinateur déterminant, à partir du rapport entre le nombre total d'impulsions possible et le nombre des impulsions produites à chaque rotation des roues de mesure, le nombre total des rotations de roues de mesure et, donc, le nombre des impulsions (20) pour le premier train d'impulsions (4), pendant le processus d'essai.

4. Dispositif d'essai selon l'une des revendications 1 à 3, caractérisé en ce que les repères d'espacement (11) sont constitués par des traits (27) et des interstices laissant passer la lumière (28) ou des nervures et des fentes, disposés sur la règle volumétrique (12), les traits (27) ou les nervures étant aussi larges ou à peu près aussi larges que les interstices laissant passer la lumière, respectivement les fentes, tandis qu'il est prévu, comme détecteur, un capteur opto-électrique (8), notamment une photodiode, éclairé par une source de lumière (9) et fixé à l'extrémité (6) de la tige de piston de mesure (7), et que l'extrémité de tige de piston (6) porte, en outre, une palette (29) située devant le capteur (8) et pourvue d'un petit nombre de repères correspondants (30) ayant un écartement et une configuration identiques à ceux des repères d'espacement (11) prévus sur la règle volumétrique, qui, en relation avec les repères d'espacement (11) de la règle volumétrique (12), définissent pour le capteur opto-électrique (8) un schéma clair caractéristique, lors de la superposition des interstices ou des fentes, et un schéma sombre caractéristique, lors du recouvrement des interstices (28) ou des fentes de la règle volumétrique (12) par les traits ou les nervures des repères correspondants (30).

Fig. 1

Fig. 2

Fig. 3

1